# EUROPEAN PATENT APPLICATION

(11) **EP 1 113 350 A1**
(43) Date of publication of application: **04.07.2001**
(21) Application number: 99310605.3
(22) Date of filing: 24.12.1999
(51) Int. Cl.: G05D 16/10, F16K 17/04, F16K 3/26

(54) **Pressure regulator**

(71) Applicant: Avantium International B.V., 1014 BV Amsterdam (NL)
(72) Inventor: The designation of the inventor has not yet been filed
(74) Representative: MacDougall, Alan John Shaw

(57) **Abstract**

Fluid (back)-pressure regulator containing a housing provided with an inlet (2) and an outlet (3) for fluid, a valve (4) located movably inside the housing (1) and provide with transport means to allow passage of fluid from inlet (2) to outlet (3), a pressure setting means (5) and a conduit (7) emerging from the inlet which is in open communication with a space (6) enclosed by the bottom of the housing and the bottom of the valve. The fluid (back)-pressure regulator can be used advantageously in operations carried out in reactor array vessels requiring throughputs of not more than 5ml/minute.

## Description

The present invention relates to an improved pressure regulator, in particular to an improved back-pressure regulator as well as to a process for regulating the (back)-pressure in a reactor system by using a (back)-pressure regulator in accordance with the present invention.

It is well known in industry how to operate pressure systems .i.n which it is desired to maintain a system at a certain pressure whilst a reaction is carried out. Suitably, say in a hydrogenation process, high pressure hydrogen is available in a storage vessel at a pressure well above the working pressure required. The flow of hydrogen emerging from the storage vessel, suitably a cylinder, containing hydrogen under high pressure, say initially at 100 bar, is normally reduced to a lower value, say 10 bar, to prevent pressure waves being formed and can be fine tuned to the actual flow needed in the reactor by means of a flow control valve. Such pressure regulators can operate in a closed or in a venting, one-phase system

In order to keep the environment at the required level (e.g. 5 bar) it is necessary to install a so-called back- pressure regulator downstream of the reactor environment which is capable of maintaining the pressure in the reactor at the required level. In practice this means that such device must be capable of reducing or even closing the passage of gas or liquid in a conduit downstream of the reactor until the pressure has come back to the required level or, conversely, is capable of relieving the pressure by opening the conduit downstream of the reactor to the extent that the passage of gas or liquid is such the required pressure is maintained again. A back-pressure regulator can also be used in systems which contain reactants (e.g. hydrogen) which will be consumed or in systems in which higher pressures may be formed because of the production of gases or the exothermicity of the reaction contemplated, causing the pressure to increase above the required level.

In some processes, the operator will be faced with a fluid containing both gaseous and liquid components each contributing to the total pressure in the system. The partial pressures of the gaseous and liquid components will be dependent on the type of reaction(s) envisaged. In the context of this invention the expression "fluid" is meant to comprise materials being either in the gaseous phase or in the liquid phase or mixtures of the two phases as the case may be.

A well known problem in industry is that it is difficult to separate gaseous and liquid components in situations where it is required to maintain the total pressure at a required (pre-set) level, especially in systems in which a multitude of vessels is involved or when dealing with systems in which rather small volumes are present. One solution is to introduce a sluice system in the conduit downstream of the reactor in order to drain off liquid which allows the use of a standard gas-phase back-pressure regulator to deal with the setting of the pressure level of the gaseous component still present. Reference is made in this respect to US patent publications 4,619,115; 4,682,622 and 4,971,1004, respectively.

Standard back-pressure regulators are operated by adjusting the throughput through the conduit line by increasing or decreasing the area through which the fluid travels by mechanical, pneumatical, electrical or any other means which will be capable of adjusting the throughput to the to the required level. Systems based on springs or bellows can be suitably applied

Turning to systems which are designed to operate with rather small reactor volumes, suitably reactor systems operating with a throughput of 5 ml/minute or less, in particular with systems operating under a flow regime of less than 0.5 ml/minute, it was found that, even for systems in which only one phase (either gaseous or liquid) is present it is already very difficult to reliably control the back-pressure, let alone for systems in which two phases (gaseous and liquid) are present. The option of introducing a sluice is no longer possible in that the size of the equipment is so small that fitting sluice devices is no longer feasible. Moreover, such systems suffer from the presence of so-called "dead volumes" which has a further disadvantage in that it is prone to a built-up of sludge which will hamper and eventualty block the normal operation of the system.

Moreover, in conditions of rather small reaction vessels, and, in particular in systems in which use is made of arrays of small reactors such as in arrays currently envisaged for rapid catalyst screening, a number of additional problems needs to be addressed. In particular the consequences of operating at rather high temperatures (thermal expansion) need to be taken into account and, together with the (rather high) pressures which may be required set stringent requirements in order to be able to operate leak-tight.

Further, in small reactor systems small conduits will be used which are highly susceptible towards external influences which may have sever consequences on the process (or screening) in actual operation. Also, the so-called "dead-volume" which is nearly always present in valve systems becomes relatively large when down scaling standard back-pressure regulators which has an undesired influence of the working of the device.

It has now been found that problems connected with regulating the back-pressure as discussed hereinabove can be overcome, both in a one phase and in a two phase fluid system, when using a self-regulating back-pressure device according to the present invention. The device is in particular of use in a gas/liquid pressure environment which hitherto was impossible to control satisfactorily on a large scale, let alone on a small scale. The device is capable of operating reliable for a long time under severe reaction conditions which has a tremendous advantage, in particular when used in rapid screening duty. Moreover, it can be manufactured at reasonable costs and it enjoys operational robustness.

The present invention therefore relates to a fluid pressure regulator containing a housing provided with an inlet and an outlet for fluids, a valve located movably inside the housing and provided with transport means to allow passage of fluids from inlet to outlet, a pressure setting means and a conduit emerging from the inlet which is in open communication with a space enclosed by the bottom of the housing and the bottom of the valve.

In particular, the present invention relates to a fluid back-pressure regulator which is placed downstream of the system through which it is envisaged to maintain a steady flow.

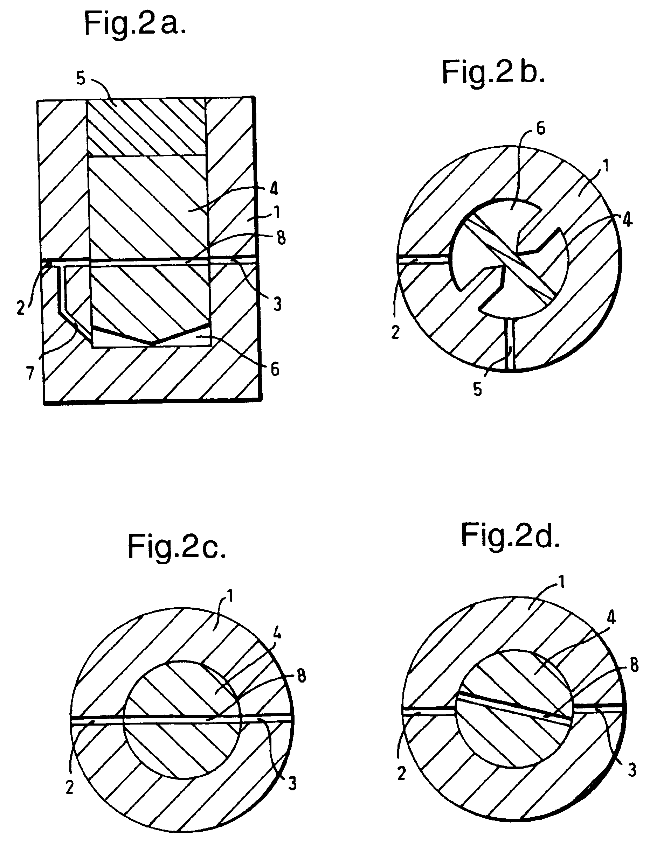

The (back)-pressure regulator according to the present invention is suitably illustrated by Figures la, 1b and 1.c. An alternative embodiment, operating on the same principle is depicted in Figures 2a and 2b. Other embodiments falling within the same concept are also within the ambit of the present invention.

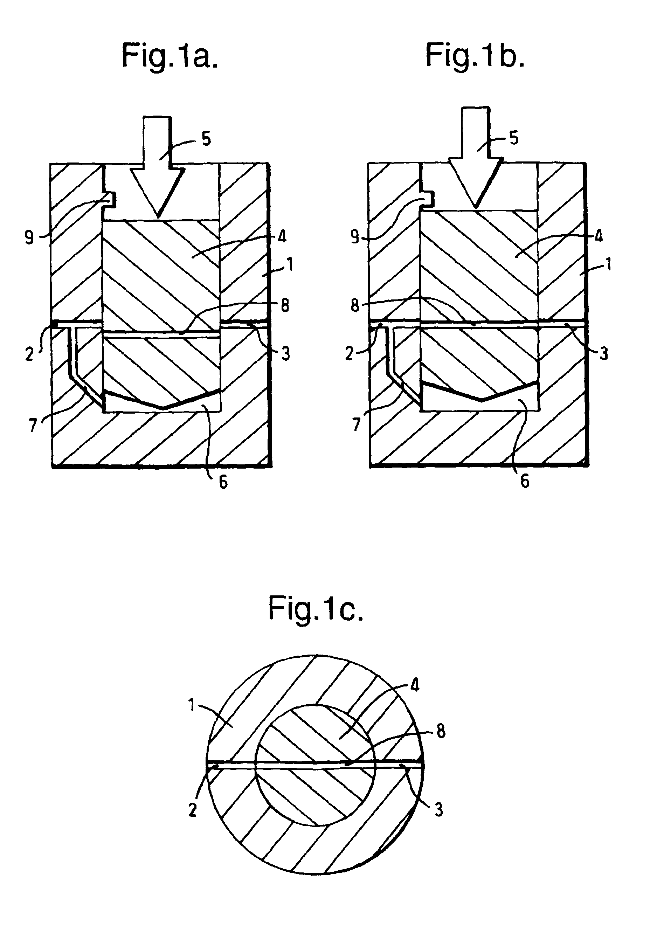

Figure 1a shows a (back)-pressure regulator in closed position and Figure 1b shows a (back)-pressure regulator in open position (with respect to the passage of fluids).

In Figure la is depicted a back-pressure regulator containing a cylindrical housing 1 having an inlet conduit 2 and an outlet conduit 3 which traverse through the wall of the housing 1 and which are suitably placed opposite one another. Inside the housing 1 is placed valve 4 which is movable in essentially vertical direction inside the interior of the housing. The inside valve is kept at a preset level by means of a force exerted on the top of the valve as indicated by arrow 5. Arrow 5 can be actuated by any suitable operational force such as, for example, pressure (e.g. by the use of bellows), mass, mechanical or electrical means. The bottom of the valve inside housing 1 is formed in such a way that it allows the presence of a space 6 which is encompassed between the bottom, of valve 4 and the bottom inside of the cylinder 1 in which valve 4 resides. The space 6 is in open communication with inlet 2 by means of conduit 7. The inside valve 4 also.contains a conduit 8 which is capable of forming a passageway together with inlet 2 and outlet 3 thus allowing the passage of fluida through the back-pressure regulator in the event that the increase in the volume of space 6 has resulted in lifting inside valve 4 against the force exerted by arrow 5 to a level at which inlet 2, outlet 3 and conduit 8 are aligned. A notch 9 is present (fixed to or forming an integral part of housing 1) to prevent valve 4 from undue displacement.

In Figure 1b the situation is depicted for a back-pressure regulator in which inlet 2, outlet 3 and conduit 8 are in a state of alignment thus allowing transfer of fluida through the back-pressure regulator. In Figure 1c a cross-section of the back-pressure regulator is depicted showing the alignment of the three parts (inlet 2, conduit 8 and outlet 3) allowing transport of fluids.

In Figure 2a an embodiment is depicted in which the inside valve 4 is rotatably set inside housing 1. The conduit a is now located at the same level as inlet 2 and outlet 3 and will be placed in such a way that a passageway (inlet 2, conduit 8 and outlet 3) will be formed when the pressure in space 6 has reached a level which causes rotation of the inside valve to the extent that relief of pressure can be achieved (transport of fluid through the passageway indicated by 2, 8 and 3). In Figure 2b the cross-sectional area at the bottom of valve 4 is depicted in which the bottom part of valve 4 can be rotated slightly to accommodate the change of flow. In the event that the pressure delivered by force 5 is too high valve 4 will be displaced slightly so that the passageway is interrupted. In Figure 2c the passageway formed by inlet 2, conduit 8 and outlet 3 is shown in open connection and in Figure 2d it is in closed position.

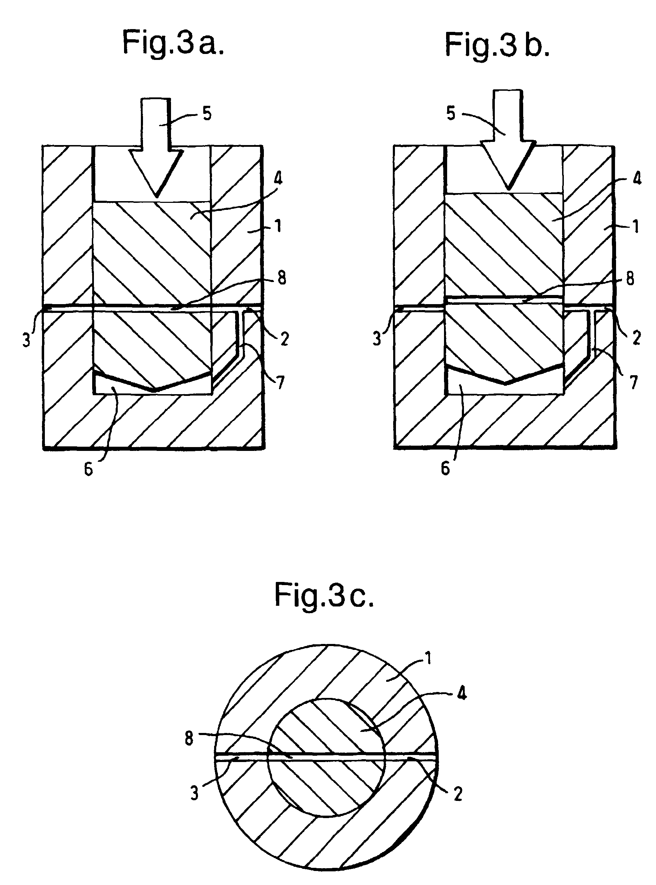

In Figure 3a a pressure reducing regulator is depicted (which operates on the same principle as the back-pressure regulator depicted in Figure 1) which is in the open position (inlet 3, conduit 8 and outlet 2 forming the passageway). In Figure 3b the passageway is depicted in closed position (the flow pattern is interrupted) and in Figure 3c a cross-section of the pressure reducing regulator is depicted showing the alignment of the three parts (inlet 3, conduit 8 and outlet 2) allowing transport of fluid.

In essence, the (back)-pressure device according to the present invention allows transport of predefined amounts of fluids (expressed in a certain amount of volume/unit of time, for rapid screening purposes normally expressed as ml/minute) in a system and will close of the throughput in the event of reaching a level below the pre-set until the proper level has been reached again. If higher pressures are required, the force to be exerted on the inside valve 4 (schematically indicated by arrow 5) will have to be adjusted to the required level.

It will be clear that the shape and length of the conduit 7 emerging from inlet 2 can vary in many ways as long as it is capable of being in open communication with space 6 in order to preserve the self-regulating activity of the back-pressure regulator. The embodiment as depicted in Figure la is a convenient way of portraying the conduit (downward sloping tube) but other configurations can be used as well. It has been found that shape and size can be used to adjust the opening in conduit 8 in a sophisticated manner. For instance, if the shape of conduit 8 is in the form of a wedge having the sharp end directed towards arrow 5, it will be possible to achieve fine-tuning of the flow since a rather small opening will be created when conduit 8 is lifted upwards as triggered by the initially increasing pressure in space 6.

It will be appreciated that the back-pressure regulator according to the present invention will contain in practice the appropriate auxiliary equipment such as attachments at the outside ends for inlet 2 and outlet 3 to be connected with the reactor system for which the back-pressure regulator is operative (inlet 2 to be connected to the conduit leaving the reactor and outlet 3 to be connected to the conduit leading to the working up section of the system). It will also suitably contain means to secure the part of the equipment providing the (adjustable) force to the inside valve to the housing by means of screws, clamps or otherwise which have not be depicted in order not to complicate the drawings.

It is also possible to use the preferred back-pressure regulator as a regular pressure regulator when inlet and outlet parts are reversed.

It has been found that the (back)-pressure regulator according tot the present invention not only allows for quick and accurate control in situations in which the flow is essentially in one phase, being either essentially gaseous or essentially liquid (i.e. containing at most insignificant amounts of the other phase as the case may be) but also in situations in which the flow is in two-phase mode, i.e. in systems in which both gaseous and liquid components contribute to the fluid. The major advantage of the (back)-pressure regulator according to the present invention is that it is capable, also in situations operating at rather low flow regimes (e.g. flow regimes of 5 ml/minute, or even less) to deal with fluids containing both gaseous and liquid components. Operating at such low flow regimes in two-phase flow can not be achieved with existing equipment. Very suitably, flow regimes between 0.1 and 2 m1/minutes can be controlled by the (back)-pressure regulator according to the present invention. In other words, the pressure regulator according to the present invention has a large dynamic range. Because of this characteristic, the regulator can switch in a very short time between a position of hardly being open to one in which it has reached the maximum opening available; especially in an operation mode in which the fluid contains both gas and liquid. The (back)-pressure regulator according to the present invention can be used advantageously in systems designed to operate in an environment envisaged for combinatorial chemistry.

A further advantage of the (back)-pressure regulator according to the present invention is that it is capable of operating in leak-tight mode. This can be achieved by machining the housing and the inside valve with such a measure of accuracy that they perform leak-tight operation of their own accord, even at elevated temperature and pressure, provided the housing and the valve are made form the same material or from materials having matching heat coefficients. Temperatures of up to 300 °C and pressures of up to 200 bars can be allowed using the back-pressure regulator according to the present invention. As an alternative to precision machining, which can be rather expensive and may sometimes be difficult to be carried out, it is also possible to provide the inside of the housing with a suitable lining which allows the motions of the valve to be operated smoothly whilst maintaining the leak-tight arrangement as envisaged. It has been found that engineering plastics, in particular TEFLON (the word TEFLON is a registered Trademark) can be suitably applied at conditions of up to e.g. 200 °C and 300 bar. It will be well-known to those skilled in the art how to design a back-pressure regulator containing the appropriate lining.

Yet another important advantage of the (back)-pressure regulator according to the present invention is that it can be operated in any position, i.e. upright (as depicted in Figure la), upside down (referring to Figure 1a as upright) as well as sideways or tilted which enlarges the window of operation. Advantageously, the regulatoc is operated in a mode which cause the flow through conduit 8 to run downwards as it contributes to the normal direction of the flow. An advantage of operating the regulator in upside down mode is that clogging of conduit 7 and space 6 is minimised. It will be clear that the various positions are attainable because of the leak-tight nature of the regulator.

The (back)-pressure regulator can be made of any suitable material. Preferably it is made of steel, in particular cf stainless steel but other materials can also be used, such as Invar. The means to provide the required back-pressure are well-known to those skilled in the art and are not described in great detail. Examples of bellows-driven pressure regulating valves can be found in US patent publications 4619115, 4682622 and 4971104. It is also possible to create and control the force (indicated by arrow 5 in Figure la) by direct pressure.

The present invention also relates to a process for regulating the (back)-pressure of a reactor system using a fluid (back)-pressure regulator comprising a housing provided with an inlet and an outlet for fluids, a valve located movably inside the housing and provided with transport means to allow passage of fluids from inlet to outlet, a pressure setting means and a conduit emerging from the inlet which is in open communication with a space enclosed by the bottom of the housing and the bottom of the valve, in which process a pre-set pressure is maintained by setting the pressure such that under non-perturbing conditions a steady flow of fluids is preserved whilst under conditions deviating from the pre-set conditions the valve is caused to respond to the deviations by changing the throughput through the passageway formed by inlet, conduit and outlet by means of the change in the actual throughput.

The process according to the present invention allows in essence compensation for changes in pressure compared with the pre-set pressure caused by the system and registered by a difference in the flow of fluids through the reaction system towards the (back)-pressure regulator which change, in its turn causes (via conduit 7) a change in the pressure in space 6 (enclosed by the bottom of the housing and the bottom of the valve inside the housing) which triggers the required compensating operation in the change of the throughput. The mechanism by which the system operates can be defined as self-regulating. This is advantageous in that there is no need to apply electronic equipment, such as PID devices, as the system is intrinsically robust and reliable.

The (back)-pressure regulator according to the present invention is suitably used in small scale operations since it meets the critical parameters therefore, in particular under conditions of using a fluid containing both gaseous and liquid components as it has a large dynamic range. In particular, it can be used advantageously in situations wherein use is made of reactor vessel arrays in which a number of (different) physical and/or chemical operations can be performed, either simultaneously or sequentially.

The desire to perform a multitude of operations in a short time is well-known to those skilled in the art and a number of systems has already been proposed, and some are commercially available, to decrease the time in which, and possibly, the size which physical and/or chemical operations have to be performed. There is still room for improvement in carrying out operations at elevated temperature and pressure in reactor vessel arrays. Reference is made, in this respect to European patent application number 99305017.8 in which solutions are described relating to carrying out processes at elevated temperature and pressure in reactor vessel arrays. The back-pressure regulator according to the present invention is eminently suitable for use in the reactor systems as depicted in European patent application 99305017.8.

Because the (back)-pressure regulator according to the present invention can be produced in a rather small size, suitably occupying a volume of less than 100 cm³, it can be used advantageously in multiple reactor vessel array systems, as its size is so small that this is not limiting with respect to the number of regulators required.

It is also possible to make use of a number of (back)-pressure regulators pre-set at different levels to operate pit different pressure levels whilst feeding the reactor vessels in the array with a fixed pressure. This allows the option to perform series of experiments at different, pre-set pressure levels which is highly advantageous in combinatorial chemistry.

## Claims

1. Fluid pressure regulator containing a housing provided with an inlet and an outlet for fluid, a valve located movably inside the housing and provided with transport means to allow passage of fluida from inlet to outlet, a pressure setting means and a conduit emerging from the inlet which is in open communication with a space enclosed by the bottom of the housing and the bottom of the valve.

2. Regulator according to claim 1 in which the valve inside the housing is movable in essentially vertical direction inside the interior of the housing.

3. Regulator according to claim 1, in which the valve inside the housing is rotationally movable inside the interior of the housing.

4. Regulator according to claim 3, in which the transport means inside the valve consists of a compartmentalised disk capable of being moved by pressure mounted in the space enclosed by the bottom of the housing and the bottom of the valve.

5. Regulator according to one or more of claims 1-4, in which the leak-tight operation is secured by means of a suitable lining inside the housing.

6. Regulator according to claim 5, in which the lining is made of TEFLON.

7. Regulator according to one or more of claims 1-6, in which the pressure regulating means consists of a bellows-driven system.

8. Regulator according to one or more of claims 1-7, in which the regulator serves as a back-pressure regulator.

9. Regulator according to one or more of claims 1-8, in which the conduit between inlet and outlet is in wedge-shaped form.

10. Regulator according to claim 9, in which the sharp end of the wedge is positioned in the direction of the force exercised on the valve.

11. Process for regulating the pressure of a reactor system using a fluid pressure regulator comprising a housing provided with an inlet and an outlet for fluid, a valve located movably inside the housing and provided with transport means to allow passage of fluid from inlet to outlet, a pressure setting means and a conduit emerging from the inlet which is in open communication with a space enclosed by the bottom of the housing and the bottom of the valve, in which process a pre-set pressure is maintained by setting the pressure such that under non-perturbing conditions a steady flow of fluid is preserved whilst under conditions deviating from the pre-set conditions the valve is caused to respond to the deviations by changing the throughput through the passageway formed by inlet, transport means and outlet by means of the change in the actual output.

12. Process according to claim 11, in which the fluid transported through the pressure regulator comprises both gaseous and liquid materials.

13. Process according to claim 11 or 12, in which the throughput through the pressure regulator is not more than 5 ml/minute, preferably between 0.5 and 2 ml/minute

14. Process according to one or more of claims 11-13, in which a temperature of up to 300 °C is applied.

15. Process according to one or more of claims 11-14, in which a pressure of up to 200 bar is applied.

16. Process according to one or more of claims 11-15, which is carried out under leak-tight conditions.

17. Process according to one or more of claims 11-16, in which use is made of a back-pressure regulator.

18. Process according to claim 16 or 17, in which the regulator is operated upside down or sideways.

19. Process for carrying out a multitude of operations in a short time at elevated temperature and pressure in a reactor vessel array in which the pressure is regulated by using one or more pressure regulators according to one or more of claims 1-10 which are operated by a process according to one or more of claims 11-18.

20. Process according to claim 19 in which use is made by one or more back-pressure regulators.
